# EUROPEAN PATENT APPLICATION

(11) **EP 2 958 208 A1**
(43) Date of publication of application: **23.12.2015**
(21) Application number: 15382304.2
(22) Date of filing: 11.06.2015
(51) Int. Cl.: H02G 11/00

(54) **ATTACHMENT DEVICE FOR A POWER LINE INSTALLED BETWEEN A SHIP AND A DOCK**

(30) Priority: 18.06.2014 ES 201430853 U
(71) Applicant: Foncillas Abizanda, Antonio, 23008 Jaén (ES); Hontar, Halyna, 23008 Jaen (ES)
(72) Inventor: Foncillas Abizanda, Antonio, 23008 Jaén (ES); Hontar, Halyna, 23008 Jaen (ES)
(74) Representative: Capitán García, Maria Nuria

(57) **Abstract**

Attachment device (1) for a power line (2) that is installed between a ship (3) and a dock (4) at which said ship (3) is moored, comprising first means of attachment (1.1) to the ship (3) and second means of attachment (1.2) to the dock (4), said first and second means of attachment (1.1, 1.2) are secured to the ends of an extensible spiral cable (1.3), said extensible cable (1.3) defining an inner space (1.4) with a variable length that is crossed by the power line (2).

## Description

### OBJECT OF THE INVENTION

The present invention relates to an attachment device for a power line that is installed between a ship and a dock at which said ship is moored.

### BACKGROUND OF THE INVENTION

When ships such as cargo ships, fishing boats, recreational vessels, etc. make a stop at a port, a power line is generally provided between the ship and the dock where the ship is moored. Said power line is used to power the ship from the local electrical grid, such that the ship does not have to use its generator during the stop.

The power line is connected on one of the ends thereof to an electrical board on the ship and on the other end to electrical boards of the local power grid of the port, provided in the docks or jetties.

Often, the power line is tied to both the ship and the mooring structure to which the ship's mooring lines are secured, ensuring that said power line is long enough to allow for the movement of the ship with respect to the dock due to the sea's motion.

The length required for the power line means that when the ship is close to the dock part of said power line will be submerged in the water, promoting the deterioration of the line.

In addition, said movements of the ship, often sudden, result in jerks and extreme stretching of the power line, also promoting the deterioration thereof and potentially leading to loss of power supply to the ship.

The applicant is not aware of any solutions in the prior art that solves the drawbacks described above while at the same time having features similar to those of the attachment device disclosed herein.

### DESCRIPTION OF THE INVENTION

In view of the foregoing, the present invention relates to an attachment device for a power line installed between a ship and a dock.

The attachment device comprises first means of attachment to the ship and second means of attachment to the dock.

In addition, said first and second means of attachment are secured to the ends of an coiled extensible cable. The extensible cable defines an inner space with a variable length which is crossed by the power line.

As the power line is located in the variable inner space defined by the extensible cable, it will not be submerged in the water during the movements of the ship caused by the sea's motion.

In other words, if the motion of the sea moves the ship away from the dock, reaching the maximum separation allowed by the mooring lines, the spiral defined by the extensible cable is extended longitudinally according to said separation, increasing the length of the inner space to provide a larger support or attachment area for the power line, which is also extended but does not suffer damage to its structure due to sudden jerks or excessive stretching. Thus, the use of the present device allows using a longer power line as it is supported by the extensible cable which prevents part of said power line from being submerged in the water.

If instead the sea brings the ship closer to the dock, the spiral of the extensible cable returns to its resting position, that is, it retracts and reduces the length of the internal space thereof in which the power line is contained, thereby preventing part of said power line from being submerged in the water when the ship approaches the dock.

### DESCRIPTION OF THE DRAWINGS

This specification is supplemented with a set of drawings illustrating the preferred embodiment, which are never intended to limit the invention.
Figure 1 shows a perspective view of the attachment device.
Figure 2 shows a schematic view of the attachment device of figure 1, supporting a power line installed between a ship and a dock.

### PREFERRED EMBODIMENT OF THE INVENTION

In view of the foregoing, the present invention relates to an attachment device for a power line of the type installed between a ship and a dock, meant to supply electrical power to said ship while moored to the dock.

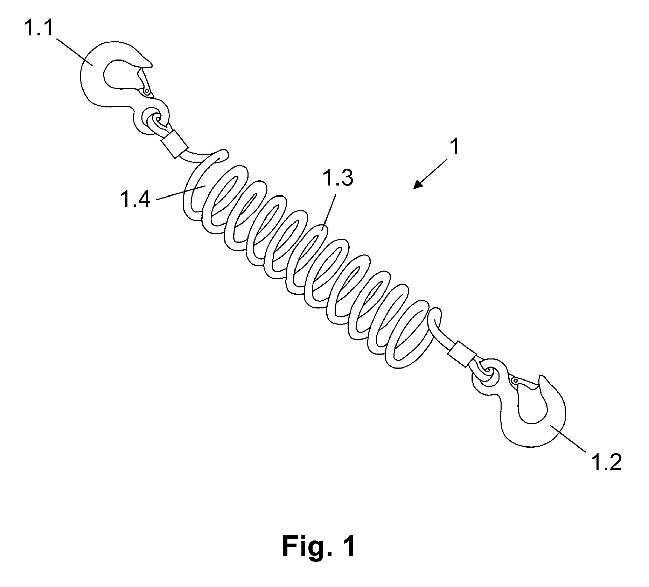

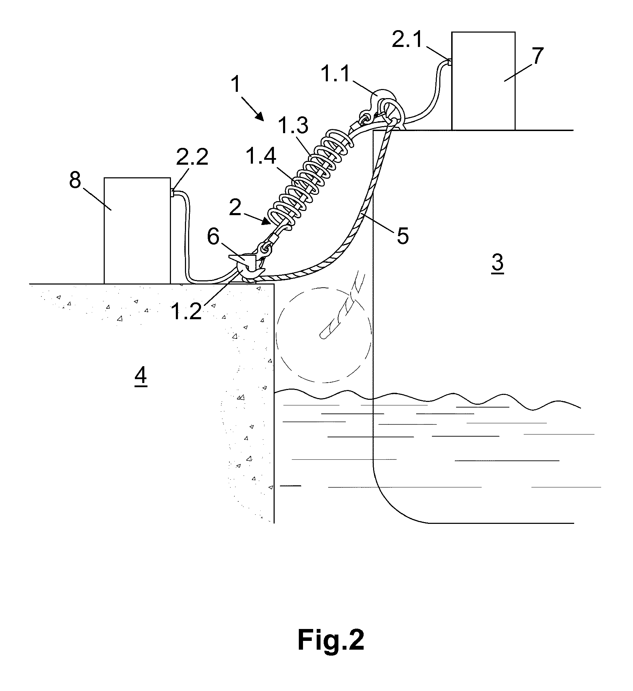

As shown in figure 1, the attachment device (1) comprises first means of attachment (1.1) to the ship and second means of attachment (1.2) to the dock (4). See also figure 2.

In addition, said first and second means of attachment (1.1, 1.2) are secured to the ends of an coiled extensible cable (1.3). Preferably, the extensible cable (1.3) is made of vinyl-coated steel, providing resistance against impacts and the weather.

The extensible cable (1.3) defines an inner space (1.4) with a variable length that is crossed by the power line (2).

As shown in figure 2, when the mooring lines (5) of the ship (3) are tied to the mooring structure (6) of the dock (4), said first and second means of attachment (1.1, 1.2) are tied to the ship (2) and to the dock (3) respectively. For example, the second means of attachment (1.2) can be anchored to the mooring structure (6).

The first and second means of attachment (1.1, 1.2) can be, for example, corresponding hooks with a safety lock.

Subsequently, the power line (2) is passed through the inner space (1.4) formed by the extensible cable (1.3).

In addition, the ends of the power line (2) comprise corresponding plugs (2.1, 2.2) which are connected to an electrical board (7) on board the ship (3) and to an electrical board (8) present in the dock (4).

In this way, the power line (2) will be supported at all times by the extensible cable (1.3) and there is no way that part of said line can be submerged in the water due to the movement of the ship (3) due to the oscillations of the sea.

Thus, when the sea's motion separates the ship (3) from the dock (4), the spiral of the extensible cable (1.3) is extended longitudinally according to said separation, increasing the length of the inner space (1.4) thereof, providing a greater supporting surface for the power line (2), which is also stretched but due to its greater length does not suffer damage to its structure due to jerks or excessive stretching.

In addition, if the oscillation of the sea brings the ship (3) closer to the dock (4), the spiral defined by the extensible cable (1.3) tends to retract, reducing the length of the inner space (1.4) thereof in which the power line (2) is supported, preventing the same from falling and being submerged in the water.

## Claims

1. Attachment device (1) for a power line (2) installed between a ship (3) and a dock (4), comprising first means of attachment (1.1) to the ship (3) and second means of attachment (1.2) to the dock (4), **characterised in that** said first and second means of attachment (1.1, 1.2) are secured to the ends of an extensible spiral cable (1.3), said extensible cable (1.3) defining an inner space (1.4) with a variable length that is crossed by the power line (2).

2. Device according to claim 1, wherein the extensible cable (1.3) is made of vinyl-coated steel.
